# EUROPEAN PATENT SPECIFICATION

(11) **EP 3 640 064 B1**
(45) Date of publication and mention of the grant of the patent: **02.03.2022**
(21) Application number: 19203881.8
(22) Date of filing: 17.10.2019
(51) Int. Cl.: B60D 1/50

(54) **HITCH CONNECTION MECHANISM FOR AUTOMATIC GUIDED VEHICLES**
KUPPLUNGSVERBINDUNGSMECHANISMUS FÜR AUTOMATISCH GEFÜHRTE FAHRZEUGE
MÉCANISME DE CONNEXION D'ATTELAGE POUR VÉHICULES À GUIDAGE AUTOMATIQUE

(30) Priority: 19.10.2018 GB 201817036
(43) Date of publication of application: 22.04.2020
(73) Proprietor: Arrival Limited, London W14 8TS (GB)
(72) Inventor: KOZLENOK, Alexander, Banbury, Oxfordshire OX16 2DJ (GB)
(74) Representative: Korenberg, Alexander Tal

(56) References cited:
- WO-A1-2010/133241
- DE-U- 1 787 848

## Description

### FIELD OF DISCLOSURE

The present disclosure relates to robotic manufacturing and a hitch.

### BACKGROUND

In robotic manufacturing, systems must be configured with consideration of the physical operations of the technological process, product design and assembling optimizations. Robotic manufacturing can include automatic guided vehicles (AGV) which are portable robots that can follow markers or wires in the floor, or use vision, magnets, or lasers for navigation. AGVs are most often used in industrial applications to move materials around a manufacturing facility or warehouse. One of the requirements for AGV systems is trailer towing of objects. What is needed is an improved hitch connection mechanism for AGVs.

DE1787848U discloses a suspension arrangement for trailer hitches of motor vehicles.

### SUMMARY OF THE DISCLOSURE

A hitch mechanism includes a connector and a connector joint. The connector has a downward extending cylindrical shaft and a circular shim that surrounds an upper end of the cylindrical shaft. A lower surface of the circular shim can have a convex rounded surface and there is a recessed annular portion between the convex surface of the circular shim and the shaft.

The connector joint has cylindrical hole extending downward from an upper surface of the connector joint. The connector joint can be within a head tube that has an inner cylindrical surface. The head tube can surround an upper rotational member and a lower rotational member. A holder cup is placed within the upper rotational member and the lower rotational member and the holder cup can rotate within the head tube. In different embodiments, the rotational member and the lower rotational member can be bushings, bearings (roller or ball), or any structures can allow the holder cup to rotate in a lower friction manner within the head tube. In an embodiment the upper rotational member can be a radial bearing and the lower rotational member can be a thrust bearing which can provide radial support as well as axial support which can resist the downward force of the connector. An elastomer holder is placed within an inner center cylindrical portion of the holder cup and half cylinder shells are or a single-piece cylinder shell which has a single slot across the length of the cylinder is placed within a center hole in the elastomer holder. The outer and lower surfaces of the elastomer holder can be surrounded by the holder cup. The elastomer holder can surround the center hole of the connector joint and the upper surface of the elastomer holder can have a convex cross section, so that the upper surface can be the shape of an upper portion of a donut ring. When the connector is placed in the connector joint, the lower convex surface of the circular shim compresses against the upper surface of the elastomer holder. The lower apex diameter of the circular shim can be substantially the same as the upper apex diameter of the elastomer holder. This compression of the elastomer holder by the circular shim can cause the elastomer holder to extend inward moving the one or more shells inward against outer cylindrical surface of the shaft. The compression of the one or more shells against the shaft can help to hold the shaft in the connector to the connector joint.

The connector can be coupled to a trailer or another moving device such as an AGV that follows a towing device which can be an AGV. The shaft is vertically oriented and when placed in the connector joint, the shaft orientation causes the connector joint to remain in a vertical orientation. The connector joint can be mounted to an AGV. If the AGV is a two-wheel design, the vertical orientation of the shaft keeps the AGV in an upright position even when a substantial towing force is applied to the connector shaft. In some embodiments, multiple AGVs can be coupled with connectors which are attached to each other by an elongated member so that the AGVs can be used in combination.

### BRIEF DESCRIPTION OF THE DRAWINGS

FIGS. 1 and 2 illustrate a system with two AGVs having hitch connection mechanisms coupled to a connection member.
FIG. 3 illustrates a cross section view of an embodiment of a hitch connection mechanism.
FIG. 4 illustrates an exploded view of an embodiment of a hitch connection mechanism.
FIGS. 5 and 6 illustrate cross section views of annular elastomer holders, shells and circular shims.
FIGS. 7-9 illustrate embodiments of AGVs which utilize the disclosed hitch.

### DETAILED DESCRIPTION

The present disclosure is directed towards a hitch connection mechanism for AGVs. The present disclosure is intended to provide an AGV with an automatic hitch device, which can provide the AGV with the ability to connect to a trailer or multiple AGVs mounting and decoupling automatically. Additionally, the disclosed hitch system construction might be used as a connector for coupling robotic tools, grippers, carrying platforms, trays, or other devices to an AGV. The disclosed hitch is also applicable for various other use-cases.

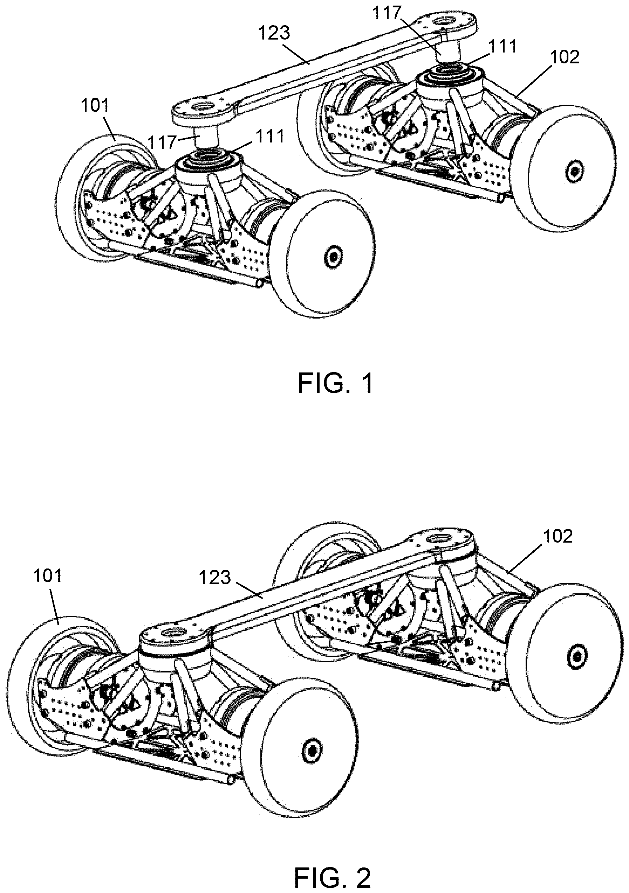

The hitch system serves the controlled connection, retention and disconnection of the AGV robot from tools, rigging and other AGV robots or trailed dollies. FIGS. 1 and 2 illustrate an embodiment of the hitch system used with a system having two dual-wheeled AGV 101, 102 and a connector 123. In this example, the first AGV 101 leads and the second AGV 102 follows. The connector 123 is an elongated structure that has downward facing connection shafts 117 on the ends of the connector 123. The connection shafts 117 are placed within holes in the annular elastomer holders 111. The annular elastomer holders 111 can be mounted in an upper center portion of the AGV 101. While the figures illustrate the disclosed hitch connection mechanism with AGVs, in other embodiments, the disclosed hitch connection mechanism can be used with any other type of powered robotic transportation mechanism or any other type of towing system.

The AGVs 101, 102 can each have two separate motors which each drive a wheel. In the assembled configuration shown in FIG. 2, the connector 123 can rotate freely relative to the AGVs 101, 102, which can operate in a coordinated manner. In one control mode, the second AGV 102 can simply follow the first AGV 101. In other configurations, the AGVs 101, 102 can each drive independently which can allow the assembly to maneuver in any desired manner and into specific locations. For example, the AGVs 101, 102 can each be rotated in parallel in the same direction relative to the connector 123. In another example, the AGVs 101, 102 can each be rotated in opposite directions relative to the connector 123 which can result in the assembly turning in a tight turning radius.

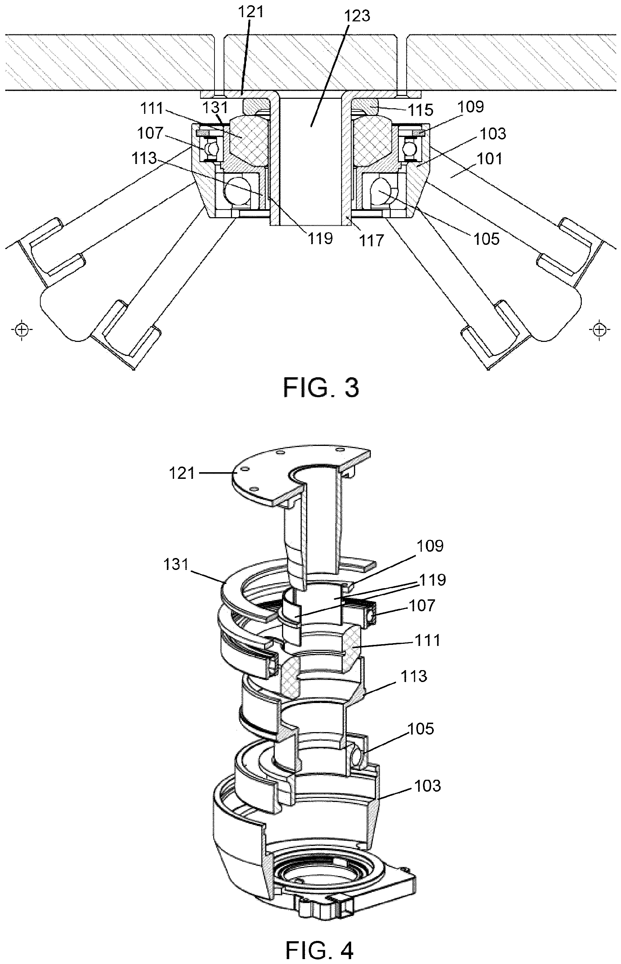

FIG. 3 illustrates a cross section view of an embodiment of the hitch in a connected configuration. The hitch can include a connector and a connector joint. In the illustrated embodiment, the connector includes a connection shaft 117 which can be a cylindrical structure with a cylindrical outer surface. The connection shaft 117 can extends downward from a flange 121 which can be a planar structure, for example the connector of Fig. 1 and 2. A circular shim 115 can be placed around the connection shaft 117 under the flange 121. The shim 115 can have a convex surface which extends downward.

In the illustrated example, the connector joint includes a head tube 103 which is coupled to an upper center portion of the AGV 101. In the illustrated embodiment, the head tube 103 can be bonded to the frame of the AGV 101. The inner surfaces of the head tube 103 can include an upper cylindrical surface and a concentric lower cylindrical surface and there is a horizontal planar step between the upper cylindrical surface and a lower cylindrical surface. Bearings are mounted in the head tube 103. In an embodiment, an upper radial bearing 107 is mounted within the upper cylindrical surface of the head tube 103 and a lower thrust bearing 105 is mounted within the lower cylindrical surface of the head tube 103. The outer diameters of the upper radial bearing 107 can be substantially the same diameter as the inner diameter of the upper cylindrical surface of the head tube 103 and the outer diameter of the lower thrust bearing 105 can be substantially the same diameter as the inner diameter of the lower cylindrical surface of the head tube 103.

A holder cup 113 is mounted within the upper radial bearing 107 and the lower thrust bearing 105. The holder cup 113 can have an upper cylindrical surface and a lower cylindrical surface. The outer diameter of the upper cylindrical surface of the holder cup 113 can be substantially the same as the inner diameter of the upper radial bearing 107 and the outer diameter of the lower cylindrical surface of the holder cup 113 can be substantially the same as the inner diameter of the lower thrust bearing 105. A lock ring 109 can be compressed and placed within the inner diameter of the head tube 103 above the upper radial bearing 107. The lock ring 109 can then be placed in a groove formed in the inner diameter of the head tube 103 to hold the upper radial bearing 107, the holder cup 113 and the lower thrust bearing 105 in the head tube 103. In an embodiment, a dust cover 131 can be paced above the upper radial bearing 107 to prevent contaminants from ambient particles. The dust cover 131 can be placed within the inner diameter of the head tube above the upper radial bearing 107 against an upper portion of the holder cup 113. In an embodiment, the holder cup 113 has a protrusion which extends radially outward from the upper outer cylindrical surface of the cup holder 113. The lower surface of the inner diameter of the upper radial bearing can be adjacent to the protrusion to prevent cup holder 113 from being pulled upward out of the head tube 103 after the lock ring 109 has been installed in the head tube 103.

Although the hitch has been illustrated and described with the upper radial bearing 107 and the lower thrust bearing 105 as ball bearings, in other embodiments, other rotational mechanisms can be used such as bushings, needle bearings, roller bearings, roller thrust bearings, or any other mechanism which can allow the holder cup 113 to rotate freely within the head tube 103 with low friction under axial and radial loads.

An annular elastomer holder 111 is held within the holder cup 113 which can closely fit against the outer and lower surfaces of the elastomer holder 111. The holder cup 113 and the head tube 103 can be made of an inelastic material such as metal, a strong plastic, a strong composite material such as carbon fiber, or other suitable inelastic materials. The annular elastomer holder 111 can have an upper surface that is higher than all other components of the connector joint. The elastomer holder 111 can have a cylindrical outer surface and a cylindrical inner surface. The outer diameter of the elastomer holder 111 can be substantially the same or slightly smaller than the upper inner diameter of the holder cup 113. A first shell 119 and a second shell 119 can be placed against the cylindrical inner surface of the annular elastomer holder 111. The concave inner surfaces of the first shell 119 and the second shell 119 can each be half cylindrical surfaces. In an embodiment, the first shell 119 and the second shell 119 can each have a planar flange extending outward from convex half cylindrical outer surfaces. The planar flanges can be placed between a planar surface of the holder cup 113 and a lower edge of the annular elastomer holder 111. The planar flanges can prevent the first shell 119 and the second shell 119 from falling out of the connector joint. The concave inner surfaces of the first shell 119 and the second shell 119 can provide a sliding surface against which the connection shaft 117 can slide when the hitch is being connected and disconnected.

Although some embodiments of the hitch connection system include two half cylinder shells 119 as described above, in other embodiments, the two shells 119 can be replaced with a single-piece cylinder shell which has a single slot across the length of the cylinder. As discussed, the inner diameter of the cylindrical surface of the elastomer holder 111 can contract when the upper surface is compressed by the circular shim 115. In this embodiment, the single-piece cylinder shell can contract so the inner diameter decreases so that it is pressed against the connection shaft 117.

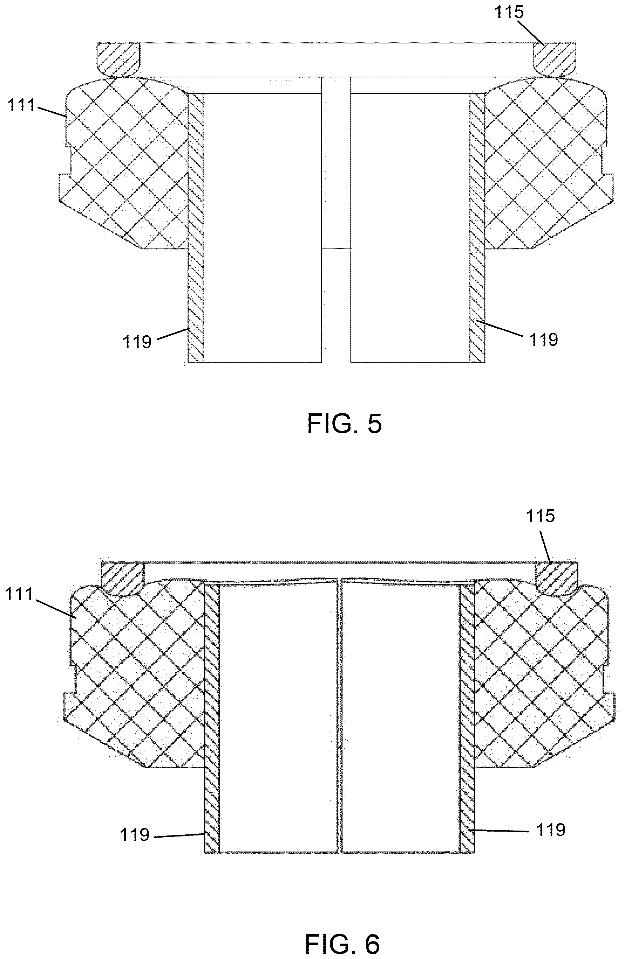

With reference to FIGS. 5 and 6, a more detailed cross section of an embodiment of the elastomer holder 111, the circular shim 115, the first shell 119 and the second shell 119 are illustrated. The upper surface of the elastomer holder 111 and the lower surface of the circular shim 115 can both be convex surfaces. When the upper surface of the elastomer holder 111 is compressed downward by the lower convex surface of the circular shim 115, the elastomer holder 111 can expand inward against the first shell 119 and the second shell 119. FIG. 5 illustrates the elastomer holder 111 in an uncompressed state where the circular shim 115 is in contact with the elastomer holder 111 but not deforming the upper surface.

The elastomer holder 111 is not compressed and does not excerpt an inward force against the first shell 119 and the second shell 119. Thus, there is a gap between the first shell 119 and the second shell 119.

With reference to FIG. 6, a downward force is applied to the circular shim 115 which is pressed against the upper surface of the elastomer holder 111. The elastic material of the elastomer holder 111 is compressed and the inner diameter of the elastomer holder 111 contracts inward resulting in the first shell 119 and the second shell 119 moving towards each other. The circular shim 115 is pressed against the upper surface of the elastomer holder 111 when the connection shaft (not shown) is fully inserted into the elastomer holder 111 between the first shell 119 and the second shell 119. Thus, the first shell 119 and the second shell 119 would be compressed against the connection shaft. In the illustration, the first shell 119 and the second shell 119 are moved very close to each other due to the inward force of the compressed elastomer holder 111 since the connection shaft is not between the first shell 119 and the second shell 119.

When a downward force is applied to the circular shim 115 compressing the top of the elastomer holder 111, the shells 119 are compressed inward against the connection shaft shown in FIG. 3. This compression tends to secure the shells 119, the elastomer holder 111, the holder cup 113 and the inner race of the upper radial bearing 107 and the inner race of the lower thrust bearing 105 to the connection shaft 117. The upper radial bearing 107 and the lower thrust bearing 105 allow the connection shaft 117 the shells 119, the elastomer holder 111, and the holder cup 113 to all rotate about a vertical axis aligned with the center of the connection joint. The upper radial bearing 107 and the lower thrust bearing 105 transfer horizontal forces which are generated by the AGV to a structure coupled to the connection shaft 117. In general, there will be a downward force applied to the connection shaft 117 and the lower thrust bearing 105 which can transmit the vertical forces from the connection shaft 117 to the AGV.

In some embodiments, the elastomer holder 111 can be made of various elastic materials. In an embodiment, elastomer holder 111 can be made of strong elastic material such as polyurethane. However, in other embodiments, other suitable materials can include rubber materials such as: natural rubber, polyisoprene, polybutadiene, butyl rubber, styrene, nitrile rubber, ethylene, propylene, polyacrylic, silicon, fluoroelastomers, ethylene vinyl, etc. The elastomer holder 111 material can have a hardness that can provide industrial strength and hardness to prevent damage when exposed to hard forceful contact with the connection shaft 117.

In the illustrated embodiments, the outer and lower surfaces of the elastomer holder 111 are in direct contact with the inner upper surfaces of the holder cup 113 and the inner cylindrical surface of the elastomer holder 111 is in direct contact with the outer cylindrical surfaces of the shells 119. The upper convex surface of the elastomer holder 111 can be exposed and the highest portion of the connector joint. The apex of the upper convex surface of the elastomer holder 111 can define a circle having a diameter that can be midway between the inner and outer cylindrical diameters of the elastomer holder 111. The circular shim 115 can have a convex surface which can extend downward. The lower surface of the circular shim 115 can have substantially the same diameter as the apex of the elastomer holder 111. When the circular shim 115 is pressed into the upper surface of the elastomer holder 111, the elastic material can conform to the convex surface of the circular shim 115. Because the upper, lower and outer surface of the elastomer holder 111 are against solid surfaces, the elastomer holder 111 can only move inward as illustrated in FIG. 6.

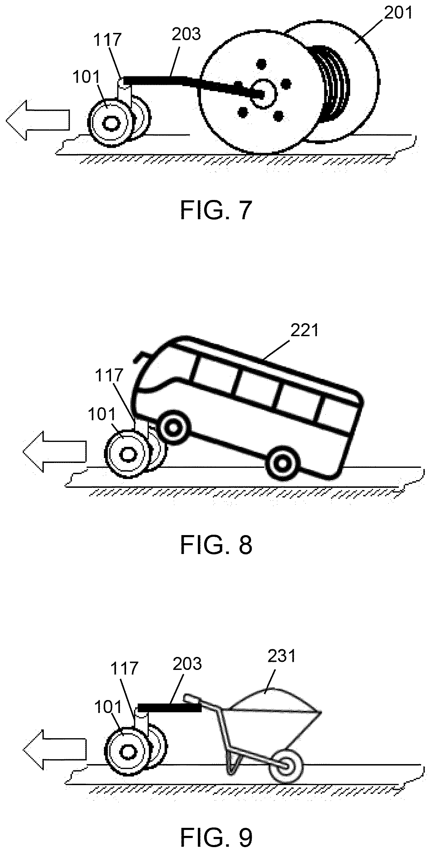

In some embodiments, the AGV 101 can be used to tow various objects. With reference to FIG. 7, the AGV 101 can be used to tow a spool 201 which is coupled to a tow bar 203. The spool 201 is coupled to one end of the tow bar 203 and the opposite end is coupled to a vertical connection shaft 117. The connection joint is placed at the upper center portion of the AGV 101. The hitch is coupled when the connection shaft is placed in the connection joint and the AGV 101 can pull the spool 201 to any location. The vertical orientation of the connection shaft 117 allows the AGV 101 to rotate relative to the tow bar 203 so the spool 201 can be towed to any desired location. A mechanism can be used to pull the tow bar 203 and connection shaft 117 up and out of the connector joint. The AGV 101 can then be used to move other objects.

With reference to FIG. 8, in an embodiment, the AGV 101 can be a large device which is capable of towing a large vehicle 221 such as a bus. In the illustrated embodiment, a front portion of the vehicle 221 can be coupled to a connection shaft 117 which can be inserted into a connector joint on the AGV 101. The front wheels of the vehicle 221 can be raised off the ground and the rear wheels can roll over the pavement when the vehicle 221 is towed by the AGV 101. With reference to FIG. 9, an AGV 101 can be used to pull smaller structures such as wheelbarrow 231. In this embodiment, the vertical connection shaft 117 can be coupled to the handle portion of the wheelbarrow 231. In other embodiments, the disclosed hitch can be used with any movable structure.

The present disclosure, in various embodiments, includes components, methods, processes, systems and/or apparatus substantially as depicted and described herein, including various embodiments, subcombinations, and subsets thereof. Those of skill in the art will understand how to make and use the present disclosure after understanding the present disclosure. The present disclosure, in various embodiments, includes providing devices and processes in the absence of items not depicted and/or described herein or in various embodiments hereof, including in the absence of such items as may have been used in previous devices or processes, e.g., for improving performance, achieving ease and/or reducing cost of implementation. The invention is defined in the appended claims.

## Claims

1. A hitch for automatic guided vehicles, the hitch comprising:
a connector (123) having:
when in use, a vertically oriented shaft (117) having a cylindrical outer surface;
a flange (121) coupled to an upper end of the cylindrical outer surface; and
a circular shim (115) around the upper end of the cylindrical outer surface that is adjacent to a lower surface of the flange;
a connector joint having:
a head tube (103);
a lower rotational member (105) within a lower portion of the head tube;
an upper rotational member (107) within an upper portion of the head tube;
a holder cup (113) having an upper cylindrical portion within the upper rotational member and a lower cylindrical portion within the lower rotational member;
an annular elastomer holder (111) within the upper cylindrical portion of the holder cup; and either
a first shell (119) against a first inner surface of the annular elastomer holder and a second shell (119) against a second inner surface of the annular elastomer holder, wherein when the connector is placed in the connector joint, a lower surface of the circular shim is compressed against the annular elastomer holder, thereby compressing the first shell and the second shell against the cylindrical outer surface of the connector shaft, or
a single-piece cylinder shell against an inner surface of the annular elastomer holder, the single-piece cylinder having a single slot across the length of the cylinder, wherein when the connector is placed in the connector joint, a lower surface of the circular shim is compressed pressed against the annular elastomer holder, thereby compressing the single-piece shell against the cylindrical outer surface of the connector shaft.

2. A hitch as claimed in claim 1, wherein the lower surface of the circular shim and the upper surface of the annular elastomer holder are convex surfaces.

3. A hitch as claimed in any preceding claim, wherein the first shell and the second shell have flanges which are placed into a groove in the annular elastomer holder.

4. A hitch as claimed in any preceding claim, wherein the lower rotational member is a thrust bearing (105) which supports an axial load from the connector.

5. A hitch as claimed in any of claims 1 to 3, wherein the lower rotational member is a thrust bushing which supports an axial load from the connector.

6. A hitch as claimed in any preceding claim, wherein the upper rotational member is a radial bearing (107).

7. A hitch as claimed in any of claims 1 to 5, wherein the upper rotational member is a radial bushing.

8. A hitch as claimed in any preceding claim, wherein an inner diameter of the lower rotational member is smaller than an inner diameter of the upper rotational member.

9. A hitch as claimed in any preceding claim, wherein when the connector is placed in the connector joint, the holder cup, the annular elastomer holder, the first shell and the second shell rotate axially with the connector within the upper rotational member and the lower rotational member.

10. A hitch as claimed in any preceding claim, comprising:
a lock ring (109) placed above the upper rotational member wherein an outer surface of the lock ring is placed within an upper groove in the head tube.

11. A hitch as claimed in any preceding claim, wherein an upper surface of the annular elastomer holder has a convex cross section surface that is a highest portion of the connector joint.

12. A hitch as claimed in any preceding claim, wherein the circular shim has annular in shape and a cross section of the circular shim has a convex cross section surface that is the lowest portion of the circular shim.

13. A hitch as claimed in any preceding claim, wherein the head tube is aligned with a vertical axis.

14. A hitch as claimed in any preceding claim, wherein the head tube is in direct physical contact with an automatic guided vehicle.

15. A hitch as claimed in any preceding claim, wherein the flange is coupled to a tow mechanism of a trailer.

## Patentansprüche

1. Anhängerkupplung für automatische geführte Fahrzeuge, wobei die Anhängerkupplung Folgendes umfasst:
einen Verbinder (123) umfassend:
im Gebrauch eine vertikal ausgerichtete Welle (117) mit einer zylindrischen Außenfläche,
einen Flansch (121), der an ein oberes Ende der zylindrischen Außenfläche gekoppelt ist, und
eine kreisförmige Beilage (115) um das obere Ende der zylindrischen Außenfläche, das einer unteren Fläche des Flanschs benachbart ist,
ein Verbindergelenk umfassend:
ein Steuerrohr (103),
ein unteres Drehglied (105) in einem unteren Abschnitt des Steuerrohrs,
ein oberes Drehglied (107) in einem oberen Abschnitt des Steuerrohrs,
eine Haltertasse (113) mit einem oberen zylindrischen Abschnitt in dem oberen Drehglied und einem unteren zylindrischen Abschnitt in dem unteren Drehglied,
einen ringförmigen Elastomerhalter (111) in dem oberen zylindrischen Abschnitt der Haltertasse und entweder
eine erste Schale (119) gegen eine erste Innenfläche des ringförmigen Elastomerhalters und
eine zweite Schale (119) gegen eine zweite Innenfläche des ringförmigen Elastomerhalters, wobei eine untere Fläche der kreisförmigen Beilage gegen den ringförmigen Elastomerhalter gedrückt wird, wenn der Verbinder in das Verbindergelenk platziert wird, wodurch die erste Schale und die zweite Schale gegen die zylindrische Außenfläche der Verbinderwelle gedrückt werden, oder
eine einteilige Zylinderschale gegen eine Innenfläche des ringförmigen Elastomerhalters, wobei der einteilige Zylinder einen einzelnen Schlitz über die Länge des Zylinders hat, wobei eine untere Fläche der kreisförmigen Beilage gegen den ringförmigen Elastomerhalter gedrückt wird, wenn der Verbinder in das Verbindergelenk platziert wird, wodurch die einteilige Schale gegen die zylindrische Außenfläche der Verbinderwelle gedrückt wird.

2. Anhängerkupplung nach Anspruch 1, wobei die untere Fläche der kreisförmigen Beilage und die obere Fläche des ringförmigen Elastomerhalters konvexe Flächen sind.

3. Anhängerkupplung nach einem der vorhergehenden Ansprüche, wobei die erste Schale und die zweite Schale Flansche haben, die in eine Nut in dem ringförmigen Elastomerhalter platziert werden.

4. Anhängerkupplung nach einem der vorhergehenden Ansprüche, wobei das untere Drehglied ein Schubaufnahmelager (105) ist, das eine Axiallast von dem Verbinder stützt.

5. Anhängerkupplung nach einem der Ansprüche 1 bis 3, wobei das untere Drehglied eine Schubdurchführung ist, die eine Axiallast von dem Verbinder stützt.

6. Anhängerkupplung nach einem der vorhergehenden Ansprüche, wobei das obere Drehglied ein Radiallager (107) ist.

7. Anhängerkupplung nach einem der Ansprüche 1 bis 5, wobei das obere Drehglied eine Radialdurchführung ist.

8. Anhängerkupplung nach einem der vorhergehenden Ansprüche, wobei ein Innendurchmesser des unteren Drehglieds kleiner als ein Innendurchmesser des oberen Drehglieds ist.

9. Anhängerkupplung nach einem der vorhergehenden Ansprüche, wobei sich die Haltertasse, der ringförmige Elastomerhalter, die erste Schale und die zweite Schale axial mit dem Verbinder in dem oberen Drehglied und dem unteren Drehglied drehen, wenn der Verbinder in dem Verbindergelenk platziert ist.

10. Anhängerkupplung nach einem der vorhergehenden Ansprüche, umfassend:
einen über dem oberen Drehglied platzierten Verriegelungsring (109), wobei eine Außenfläche des Verriegelungsrings in einer oberen Nut in dem Steuerrohr platziert ist.

11. Anhängerkupplung nach einem der vorhergehenden Ansprüche, wobei eine obere Fläche des ringförmigen Elastomerhalters eine konvexe Querschnittsfläche hat, die ein höchster Abschnitt des Verbindergelenks ist.

12. Anhängerkupplung nach einem der vorhergehenden Ansprüche, wobei die kreisförmige Beilage eine ringförmige Gestalt hat und ein Querschnitt der kreisförmigen Beilage eine konvexe Querschnittsfläche hat, die der niedrigste Abschnitt der kreisförmigen Beilage ist.

13. Anhängerkupplung nach einem der vorhergehenden Ansprüche, wobei das Steuerrohr auf eine vertikale Achse ausgerichtet ist.

14. Anhängerkupplung nach einem der vorhergehenden Ansprüche, wobei das Steuerrohr in direktem physischem Kontakt mit einem automatischen geführten Fahrzeug ist.

15. Anhängerkupplung nach einem der vorhergehenden Ansprüche, wobei der Flansch an einen Anhängemechanismus eines Anhängers gekoppelt ist.

## Revendications

1. Attelage pour véhicules à guidage automatique, l'attelage comprenant :
un raccord (123) ayant :
lors de l'utilisation, un arbre orienté verticalement (117) ayant une surface extérieure cylindrique ;
une bride (121) accouplée à une extrémité supérieure de la surface extérieure cylindrique ; et
une cale circulaire (115) autour de l'extrémité supérieure de la surface extérieure cylindrique qui est adjacente à une surface inférieure de la bride ;
un joint de raccord ayant :
un tube de direction (103) ;
un élément rotatif inférieur (105) à l'intérieur d'une partie inférieure du tube de direction ;
un élément rotatif supérieur (107) à l'intérieur d'une partie supérieure du tube de direction ;
une coupelle de support (113) ayant une partie cylindrique supérieure à l'intérieur de l'élément rotatif supérieur et une partie cylindrique inférieure à l'intérieur de l'élément rotatif inférieur ;
un support élastomère annulaire (111) à l'intérieur de la partie cylindrique supérieure de la coupelle de support ; et soit
une première coque (119) contre une première surface intérieure du support élastomère annulaire et une seconde coque (119) contre une seconde surface intérieure du support élastomère annulaire, lorsque le raccord est placé dans le joint de raccord, une surface inférieure de la cale circulaire étant comprimée contre le support élastomère annulaire, comprimant ainsi la première coque et la seconde coque contre la surface extérieure cylindrique de l'arbre de raccord, soit
une coque cylindrique en une seule pièce contre une surface intérieure du support élastomère annulaire, le cylindre en une seule pièce ayant une fente unique sur la longueur du cylindre, lorsque le raccord est placé dans le joint de raccord, une surface inférieure de la cale circulaire étant comprimée contre le support élastomère annulaire, comprimant ainsi la coque en une seule pièce contre la surface extérieure cylindrique de l'arbre de raccord.

2. Attelage selon la revendication 1, la surface inférieure de la cale circulaire et la surface supérieure du support élastomère annulaire étant des surfaces convexes.

3. Attelage selon l'une quelconque des revendications précédentes, la première coque et la seconde coque ayant des brides qui sont placées dans une rainure dans le support élastomère annulaire.

4. Attelage selon l'une quelconque des revendications précédentes, l'élément rotatif inférieur étant un palier de butée (105) qui supporte une charge axiale provenant du raccord.

5. Attelage selon l'une quelconque des revendications 1 à 3, l'élément rotatif inférieur étant une douille de poussée qui supporte une charge axiale provenant du raccord.

6. Attelage selon l'une quelconque des revendications précédentes, l'élément rotatif supérieur étant un palier radial (107).

7. Attelage selon l'une quelconque des revendications 1 à 5, l'élément rotatif supérieur étant un palier radial.

8. Attelage selon l'une quelconque des revendications précédentes, un diamètre intérieur de l'élément rotatif inférieur étant plus petit qu'un diamètre intérieur de l'élément rotatif supérieur.

9. Attelage selon l'une quelconque des revendications précédentes, lorsque le raccord est placé dans le joint de raccord, la coupelle de support, le support élastomère annulaire, la première coque et la seconde coque tournant axialement avec le raccord à l'intérieur de l'élément rotatif supérieur et de l'élément rotatif inférieur.

10. Attelage selon l'une quelconque des revendications précédentes, comprenant :
un anneau de verrouillage (109) placé au-dessus de l'élément rotatif supérieur, une surface extérieure de l'anneau de verrouillage étant placée dans une rainure supérieure du tube de direction.

11. Attelage selon l'une quelconque des revendications précédentes, une surface supérieure du support élastomère annulaire ayant une surface de section transversale convexe qui est une partie la plus haute du joint de raccord.

12. Attelage selon l'une quelconque des revendications précédentes, la cale circulaire ayant une forme annulaire et une section transversale de la cale circulaire ayant une surface de section transversale convexe qui est la partie la plus basse de la cale circulaire.

13. Attelage selon l'une quelconque des revendications précédentes, le tube de direction étant aligné avec un axe vertical.

14. Attelage selon l'une quelconque des revendications précédentes, le tube de direction étant en contact physique direct avec un véhicule à guidage automatique.

15. Attelage selon l'une quelconque des revendications précédentes, la bride étant accouplée à un mécanisme de remorquage d'une remorque.
